# EUROPEAN PATENT APPLICATION

(11) **EP 4 434 838 A1**
(43) Date of publication of application: **25.09.2024**
(21) Application number: 24158835.9
(22) Date of filing: 21.02.2024
(51) Int. Cl.: B60W 30/095, B60W 30/18

(54) **PREVENTING ACCIDENTS IN A T-INTERSECTION USING PREDICTIVE COLLISION AVOIDANCE**

(30) Priority: 21.03.2023 US 202318187148
(71) Applicant: Volvo Car Corporation, 405 31 Göteborg (SE)
(72) Inventor: PEREZ BARRERA, Oswaldo, 40531 Göteborg (SE)
(74) Representative: Maiwald GmbH

(57) **Abstract**

Various systems and methods are presented regarding utilizing technology onboard a first vehicle to prevent accidents within T-intersections between one or more other vehicles. Techniques are described for tracking vehicles and drivers to prevent accidents from occurring within T-intersections. In an example embodiment, a system, comprises a memory that stores computer executable components; and a processor that executes the computer executable components stored in the memory, wherein the computer executable components can comprise: a vehicle position component that can determine vehicle position data of a second vehicle and a third vehicle proximate a T-intersection; a sensor component that can capture facial profile data of a driver of the second vehicle; and a collision prediction component that can determine whether a collision will occur in the T-intersection between the second vehicle and the third vehicle.

## Description

### TECHNICAL FIELD

This application generally relates to autonomous vehicles (e.g., transportation vehicles) and, more particularly, to preventing accidents within a T-intersection using predictive collision avoidance.

### BACKGROUND

Autonomous vehicles are becoming increasingly prevalent worldwide and are poised to become one of the most common modes of transportation. It can be desirable to utilize autonomous vehicles and associated sensors to prevent, or substantially limit accidents within a T-intersection.

The above-described background relating to autonomous vehicles and systems is merely intended to provide a contextual overview of some current issues and is not intended to be exhaustive. Other contextual information may become further apparent upon review of the following detailed description.

### SUMMARY

The following presents a summary to provide a basic understanding of one or more embodiments of the invention. This summary is not intended to identify key or critical elements or delineate any scope of the particular embodiments or any scope of the claims. Its sole purpose is to present concepts in a simplified form as a prelude to the more detailed description that is presented later. In one or more embodiments described herein, systems, devices, computer-implemented methods, apparatuses and/or computer program products are presented that facilitate tracking information regarding preventing accidents in a T-intersection using predictive collision avoidance.

According to an embodiment, a system onboard a first vehicle driven at least partially autonomously, comprises a memory that stores computer executable components, and a processor that executes the computer executable components stored in the memory. The computer executable components can comprise a vehicle position component that determines vehicle position data indicating position and velocity of a second vehicle and a third vehicle proximate a T-intersection. Further, the computer executable components can also comprise a sensor component that can capture facial profile data indicating a facial profile of a driver of the second vehicle and can capture vehicle indicator data of the second vehicle. Additionally, the computer executable components can additionally comprise a collision prediction component that determines whether a collision will occur in the T-intersection between the second vehicle and the third vehicle based on the vehicle position data, the facial data, and the vehicle indicator data. If the collision prediction component predicts the collision to occur within the T-intersection, the collision prediction component can perform an action associated with the first vehicle to alert the second vehicle of a potential accident with the third vehicle.

In various implementations, the sensor component can determine whether the first vehicle is approaching the T-intersection. Additionally, the sensor component can determine a number of lanes of the T-intersection. In another example, the vehicle position component can determine if the first vehicle is traveling in a lane most proximate to the second vehicle, and, if the second vehicle is occupying a second lane that merges into the T-intersection from the right side of the first vehicle.

In some implementations, the collision prediction component can determine that the driver of the second vehicle has seen the first vehicle if a front-profile of the driver is sensed by the sensor component. Further, if the sensor component determines that the driver of the second vehicle has seen the first vehicle, the collision prediction component can activate a timer to determine a desired lane of the second vehicle.

In various implementations, if neither a front-profile nor a side-profile of the driver of the second vehicle is detected by the sensor component, the collision prediction component can determine that the driver of the second vehicle intends to travel to an opposite lane relative to a driving direction of the first vehicle. Additionally, if the driver of the second vehicle intends to travel to the opposite lane relative to the driving direction of the first vehicle, the vehicle position component can determine if vision of the third vehicle is obstructed by the first vehicle from a point of view from the second vehicle. If the second vehicle is moving, and the third vehicle is not reducing speed, the collision prediction component can activate a warning to alert the driver of the second vehicle to prevent the collision between the second vehicle and the third vehicle. The vehicle indicator data of the second vehicle can indicate whether a right turn signal, a left turn signal, or hazard lights are activated on the second vehicle.

In other embodiments, elements described in connection with the disclosed systems can be embodied in different forms such as computer-implemented methods, computer program products, or other forms. For example, in an embodiment, a computer-implemented method can be utilized to determine, by a device operatively coupled to a processor, onboard a first vehicle driven at least partially autonomously, vehicle position data indicating position and velocity of a second vehicle and a third vehicle proximate a T-intersection. The method can further comprise capturing, by the device, facial profile data indicating facial profiles of a driver of the second vehicle and vehicle indicator data of the second vehicle; and determining, by the device, whether a collision will occur in the T-intersection between the second vehicle and the third vehicle based on the vehicle position data, the facial profile data, and the vehicle indicator data. Additionally, the method can comprise performing, by the device, an action associated with the first vehicle to alert the second vehicle of a potential accident with the third vehicle if the collision is predicted to occur.

In various embodiments, the method can further comprise determining, via the device, if the second vehicle is approaching the T-intersection; determining, via the device, if the first vehicle is traveling in a lane most proximate to the second vehicle; and determining, via the device, if the third vehicle is traveling in the same direction as the first vehicle and in an adjacent lane to the first vehicle. The method can comprise determining, via the device and the facial profile data, that the driver of the second vehicle has seen the third vehicle if a front-profile of the driver of the second vehicle has been sensed by the first vehicle. Additionally, the method can comprise determining, via the device and the facial profile data, that the driver of the second vehicle intends to travel to an opposite lane relative to a direction of the first vehicle if neither a front-profile nor a side-profile of the driver of the second vehicle are detected.

In some embodiments, the method can comprise determining, via the device, if the third vehicle is hidden from view of the driver of the second vehicle by the first vehicle via the vehicle position data. Additionally, the method can comprise omitting a warning, via the device, to notify the second vehicle that the collision will occur between the second vehicle and the third vehicle if the third vehicle has not reduced speed and a front-profile of a second driver of the third vehicle has not been sensed.

In various embodiments, a computer program product for preventing vehicle collisions within a T-intersection can comprise a non-transitory computer readable storage medium having program instructions embodied therewith, the program instructions can be executable by a processor onboard a first vehicle driven at least partially autonomously to cause the processor to: determine vehicle position data indicating position and velocity of a second vehicle and a third vehicle proximate the T-intersection; and capture facial profile data indicating facial profiles of a first driver of the second vehicle and a second driver of the third vehicle, as well as vehicle indicator data of the second vehicle.

In some embodiments, the program instructions can further be executable by the processor to cause the processor to determine whether a collision will occur in the T-intersection between the second vehicle and the third vehicle based on the vehicle position data, the facial profile data, and the vehicle indicator data. Additionally, the program instructions can be executable by the processor to cause the processor to perform an action associated with the first vehicle to alert the second vehicle of a potential accident with the third vehicle. The program instructions can further be executable by the processor to cause the processor to determine that the first driver of the second vehicle has seen the third vehicle if a front-profile of the first driver of the second vehicle has been sensed. Further, the program instructions can be executable by the processor to cause the processor to determine that the first driver of the second vehicle intends to travel to an opposite lane relative to a driving direction of the first vehicle if neither a front-profile nor a side-profile of the first driver of the second vehicle has been detected; and predict whether the collision will occur between the second vehicle and the third vehicle via the vehicle position data of the second vehicle and the third vehicle, and wherein the action can be emitting an audio warning to alert the second vehicle or the third vehicle of a potential collision.

In some embodiments, elements described in connection with the disclosed systems and devices can be embodied in different forms such as a computer-implemented method, a computer program product, or another form.

### BRIEF DESCRIPTION OF THE DRAWINGS

FIG. 1 illustrates a system that can be utilized by an at least partially autonomous first vehicle for preventing accidents with a T-intersection using predictive collision avoidance, in accordance with various aspects and embodiments described herein.
FIG. 2A presents a schematic illustrating an appropriate T-intersection for which the at least partially autonomous first vehicle can prevent accidents within using predictive collision avoidance, in accordance with various aspects and embodiments described herein.
FIG. 2B presents a schematic illustrating another appropriate T-intersection for which the at least partially autonomous first vehicle can prevent accidents within using predictive collision avoidance, in accordance with various aspects and embodiments described herein.
FIG. 3 presents a schematic illustrating a map that indicates appropriate T-intersections and various traffic lights for which the at least partially autonomous first vehicle can prevent accidents within using predictive collision avoidance, in accordance with various aspects and embodiments described herein.
FIG. 4 illustrates the at least partially autonomous first vehicle determining a driving intent of the driver of a second vehicle, in accordance with various aspects and embodiments described herein.
FIG. 5A illustrates the at least partially autonomous first vehicle determining a vision direction of the second vehicle via facial profile data, in accordance with various aspects and embodiments described herein.
FIG. 5B illustrates the at least partially autonomous first vehicle determining if a third vehicle is hidden from the view of the driver of the second vehicle, in accordance with various aspects and embodiments described herein.
FIG. 5C illustrates the at least partially autonomous first vehicle emitting a warning to alert the driver of the second vehicle of a potential collision with the third vehicle, in accordance with various aspects and embodiments described herein.
FIG. 6 illustrates a flow diagram for a computer-implemented methodology for preventing accidents within a T-intersection using predictive collision avoidance, in accordance with various aspects and embodiments described herein.
FIG. 7 illustrates additional flow diagrams for the computer-implemented methodology for preventing accidents within a T-intersection using predictive collision avoidance, in accordance with various aspects and embodiments described herein.
FIG. 8 presents a schematic of a computing environment in which the various embodiments of the embodiment described herein can be implemented.
FIG. 9 is a schematic block diagram of a sample computing environment with which the disclosed subject matter can interact.
FIG. 10 presents TABLE 1000 presenting a summary of SAE J3016 detailing respective functions and features during Levels 0-5 of driving automation (per June 2018).

### DETAILED DESCRIPTION

The following detailed description is merely illustrative and is not intended to limit embodiments and/or application or uses of embodiments. Furthermore, there is no intention to be bound by any expressed or implied information presented in any of the preceding Background section, Summary section, and/or in this Detailed Description section.

It is to be understood that when an element is referred to as being "coupled" to another element, it can describe one or more different types of coupling including, but not limited to, chemical coupling, communicative coupling, electrical coupling, electromagnetic coupling, operative coupling, optical coupling, physical coupling, thermal coupling, and/or another type of coupling. Likewise, it is to be understood that when an element is referred to as being "connected" to another element, it can describe one or more different types of connecting including, but not limited to, electrical connecting, electromagnetic connecting, operative connecting, optical connecting, physical connecting, thermal connecting, and/or another type of connecting.

As used herein, "data" can comprise metadata. Further, ranges A-n are utilized herein to indicate a respective plurality of devices, components, signals etc., where n is any positive integer.

In the various embodiments presented herein, the disclosed subject matter can be directed to utilizing one or more components located on a vehicle being operated in an autonomous manner, wherein the one or more components can be utilized to prevent accidents in T-intersections using predictive collision avoidance. The first vehicle (e.g., an autonomous vehicle) can utilize various onboard systems and sensors, including one or more computer implemented algorithms (including vision algorithms), to detect vehicles on the road, as well as positions, velocities, and/or predictive paths. In an embodiment, the onboard system can be configured to determine if the first vehicle is approaching a T-intersection. Further, the first vehicle can determine if one or more other vehicles (e.g., a second vehicle and/or a third vehicle) are approaching or are within the T-intersection. Additionally, the first vehicle can utilize the onboard system to determine the number and directions of the lanes forming the T-intersection. In a similar manner, the first vehicle can detect the presence of traffic lights (caution lights, standard traffic light, turn lights, etc.) and/or signs (stop signs, caution signs, etc.) at the T-intersection, which can be considered the traffic direction data.

In further embodiments, the first vehicle (and/or the onboard system) can determine velocities and positions of the one or more other vehicles (the second vehicle and/or the third vehicle), which can be considered as the positional data. With embodiments, the onboard system can be configured to determine if a collision is likely to occur given the positional data and the traffic direction data, as well as considering facial recognition data and vehicle indicator data. The onboard system can be configured to detect a facial profile (e.g., which indicates a facial/vision direction, or the direction that a driver's head is facing) of one or more drivers of the one or more other vehicles, which can be considered the facial profile data. Additionally, the onboard system can be configured to detect indicator lights of the one or more other vehicles. In examples, the second vehicle can be approaching the first vehicle from a perpendicular direction relative to the direction of travel of the first vehicle (e.g., from the right side of the first vehicle), and the first vehicle can determine if any of the indicator lights of the second vehicle are active. Further, the first vehicle can determine if the second vehicle is intending to turn left, turn right, or to perform no action based on the sensed indicator lights of the second vehicle.

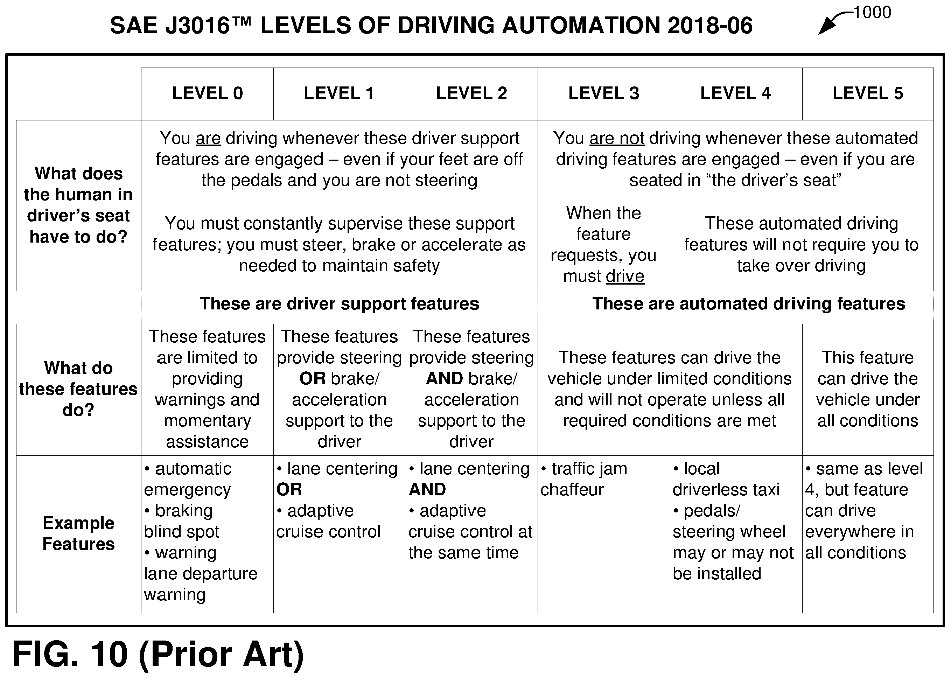

Regarding the phrase "autonomous" operation, to enable the level of sophistication of operation of a vehicle to be defined across the industry by both suppliers and policymakers, standards are available to define the level of autonomous operation. For example, the International Standard J3016 *Taxonomy and Definitions for Terms Related to Driving Automation Systems for On-Road Motor Vehicles* has been developed by the Society of Automotive Engineers (SAE) and defines six levels of operation of a driving automation system(s) that performs part or all of the dynamic driving task (DDT) on a sustained basis. The six levels of definitions provided in SAE J3016 range from no driving automation (Level 0) to full driving automation (Level 5), in the context of vehicles and their operation on roadways. Levels 0-5 of SAE J3016 are summarized below and further presented in FIG. 10, Table 1000.

Level 0 (No Driving Automation): At Level 0, the vehicle is manually controlled with the automated control system (ACS) having no system capability, the driver provides the DDT regarding steering, braking, acceleration, negotiating traffic, and suchlike. One or more systems may be in place to help the driver, such as an emergency braking system (EBS), but given the EBS technically doesn't drive the vehicle, it does not qualify as automation. The majority of vehicles in current operation are Level 0 automation.

Level 1 (Driver Assistance/Driver Assisted Operation): This is the lowest level of automation. The vehicle features a single automated system for driver assistance, such as steering or acceleration (cruise control) but not both simultaneously. An example of a Level 1 system is adaptive cruise control (ACC), where the vehicle can be maintained at a safe distance behind a lead vehicle (e.g., operating in front of the vehicle operating with Level 1 automation) with the driver performing all other aspects of driving and has full responsibility for monitoring the road and taking over if the assistance system fails to act appropriately.

Level 2 (Partial Driving Automation/Partially Autonomous Operation): The vehicle can (e.g., via an advanced driver assistance system (ADAS)) steer, accelerate, and brake in certain circumstances, however, automation falls short of self-driving as tactical maneuvers such as responding to traffic signals or changing lanes can mainly be controlled by the driver, as does scanning for hazards, with the driver having the ability to take control of the vehicle at any time.

Level 3 (Conditional Driving Automation/Conditionally Autonomous Operation): The vehicle can control numerous aspects of operation (e.g., steering, acceleration, and suchlike), e.g., via monitoring the operational environment, but operation of the vehicle has human override. For example, the autonomous system can prompt a driver to intervene when a scenario is encountered that the onboard system cannot navigate (e.g., with an acceptable level of operational safety), accordingly, the driver must be available to take over operation of the vehicle at any time.

Level 4 (High Driving Automation/High Driving Operation): advancing on from Level 3 operation, while under Level 3 operation the driver must be available, with Level 4, the vehicle can operate without human input or oversight but only under select conditions defined by factors such as road type, geographic area, environments limiting top speed (e.g., urban environments), wherein such limited operation is also known as "geofencing". Under Level 4 operation, a human (e.g., driver) still has the option to manually override automated operation of the vehicle.

Level 5 (Full Driving Automation/Full Driving Operation): Level 5 vehicles do not require human attention for operation, with operation available on any road and/or any road condition that a human driver can navigate (or even beyond the navigation/driving capabilities of a human). Further, operation under Level 5 is not constrained by the geofencing limitations of operation under Level 4. In an embodiment, Level 5 vehicles may not even have steering wheels or acceleration/brake pedals. In an example of use, a destination is entered for the vehicle (e.g., by a passenger, by a supply manager where the vehicle is a delivery vehicle, and suchlike), wherein the vehicle self-controls navigation and operation of the vehicle to the destination.

To clarify, operations under levels 0-2 can require human interaction at all stages or some stages of a journey by a vehicle to a destination. Operations under levels 3-5 do not require human interaction to navigate the vehicle (except for under level 3 where the driver is required to take control in response to the vehicle not being able to safely navigate a road condition).

As referenced herein, DDT relates to various functions of operating a vehicle. DDT is concerned with the operational function(s) and tactical function(s) of vehicle operation but may not be concerned with the strategic function. Operational function is concerned with controlling the vehicle motion, e.g., steering (lateral motion), and braking/acceleration (longitudinal motion). Tactical function (aka, object and event detection and response (OEDR)) relates to the navigational choices made during a journey to achieve the destination regarding detecting and responding to events and/or objects as needed, e.g., overtake vehicle ahead, take the next exit, follow the detour, and suchlike. Strategic function is concerned with the vehicle destination and the best way to get there, e.g., destination and way point planning. Regarding operational function, a Level 1 vehicle under SAE J3016 controls steering or braking/acceleration, while a Level 2 vehicle must control both steering and braking/acceleration. Autonomous operation of vehicles at Levels 3, 4, and 5 under SAE J3016 involves the vehicle having full control of the operational function and the tactical function. Level 2 operation may involve full control of the operational function and tactical function, but the driver is available to take control of the tactical function.

Accordingly, the term "autonomous" as used herein regarding operation of a vehicle with or without a human available to assist the vehicle in self-operation during navigation to a destination, can relate to any of Levels 1-5. In an embodiment, for example, the terms "autonomous operation" or "autonomously" can relate to a vehicle operating at least with Level 2 operation, e.g., a minimum level of operation is Level 2: partially autonomous operation, per SAE J3016. Hence, while Level 2, partially autonomous operation, may be a minimum level of operation, higher levels of operation, e.g., Levels 3-5, are encompassed in operation of the vehicle at Level 2 operation. Similarly, a minimum Level 3 operation encompasses Levels 4-5 operation, and minimum Level 4 operation encompasses operation under Level 5 under SAE J3016.

It is to be appreciated that while the various embodiments presented herein are directed towards to one or more vehicles (e.g., first vehicle 102) operating in an autonomous manner (e.g., in at least a partially autonomous manner), the various embodiments presented herein are not so limited and can be implemented with a group of vehicles operating in any of an autonomous manner (e.g., Level 5 of SAE J3016), a partially autonomous manner (e.g., Level 1 of SAE J3016 or higher), or in a non-autonomous manner (e.g., Level 0 of SAE J3016).

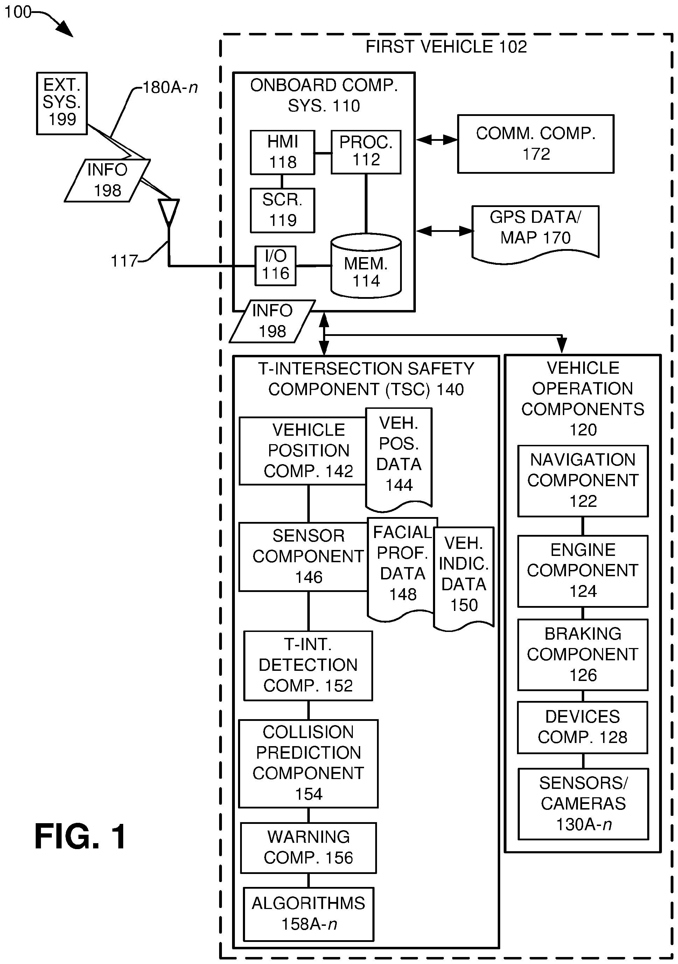

Turning now to the drawings, **FIG. 1** illustrates a system 100 that can be utilized by the first vehicle 102 to reduce traffic accidents between vehicles within (e.g., substantially proximate) a T-intersection, in accordance with one or more embodiments. System 100 comprises a first vehicle 102 with various devices and components located thereon, such as an onboard computer system (OCS) 110, wherein the OCS 110 can be a vehicle control unit (VCU). The OCS 110 can be utilized to provide overall operational control and/or operation of the first vehicle 102. In an embodiment, the OCS 110 can be configured to operate/control/monitor various vehicle operations, wherein the various operations can be controlled by one or more vehicle operation components 120 communicatively coupled to the OCS 110. The various vehicle operation components 120 can include a navigation component 122 configured to navigate the first vehicle 102 along a road as well as to control steering of the first vehicle 102. The vehicle operation components 120 can further comprise an engine component 124 configured to control operation, e.g., start/stop, of an engine configured to propel the first vehicle 102. The vehicle operation components 120 can further comprise a braking component 126 configured to slow down or stop the first vehicle 102. The vehicle operation components 120 can further include a devices component 128 configured to control operation of any onboard devices suitable to get the attention of a driver of another vehicle (e.g., the second vehicle), and the like. The onboard devices can include a device configured to generate an audible signal (e.g., a car horn on the first vehicle 102) and/or a visual signal (e.g., headlights on the first vehicle 102).

The vehicle operation components 120 can further comprise various sensors and/or cameras 130A-n configured to monitor operation of the first vehicle 102 and further obtain imagery and other information regarding environment/surroundings that the first vehicle 102 is operating in. The sensors/cameras 130A-n can include any suitable detection/measuring device, including cameras, optical sensors, laser sensors, Light Detection and Ranging (LiDAR) sensors, sonar sensors, audiovisual sensors, perception sensors, road lane sensors, motion detectors, velocity sensors, and the like, as employed in such applications as simultaneous localization and mapping (SLAM), and other computer-based technologies and methods utilized to determine an environment being navigated by the first vehicle 102 and the location of the first vehicle 102 within the environment (e.g., location mapping). Digital images, data, and the like generated by sensors/cameras 130A-n can be analyzed by algorithms 128A-n to identify respective features of interest such as drivers of other vehicles, lane markings, crosswalk markings, traffic signs, traffic lights, and other vehicles etc.

As shown, the first vehicle 102 can further include a T-intersection Safety Component (TSC) 140, wherein the TSC 140 can further comprise various components that can be utilized to prevent/limit traffic accidents between vehicles within or proximate a T-intersection. As shown in FIG. 1, the TSC 140 can be communicatively coupled to the OCS 110, the vehicle operation components 120, and other components located on board the first vehicle 102. The TSC 140 can be configured to determine when the first vehicle 102 has reached a qualifying/appropriate T-intersection. In determining a qualifying/appropriate intersection, the TSC 140 can consider the number of lanes in an intersection, the direction of lanes in an intersection, and the presence of one or more vehicles in the intersection. The TSC 140 can further comprise various algorithms 158An respectively configured to determine whether the vehicle is approaching a T-intersection, among other things.

With embodiments, a vehicle position component 142 can be included in the TSC 140, wherein the vehicle position component 142 can be configured to monitor and identify (aka determine/predict/project) position and motion of a second vehicle and/or a third vehicle. The vehicle position component 142 can be configured to determine a position of the second vehicle and the third vehicle; determine a velocity of the second vehicle and the third vehicle; and determine a projected path of travel for the second vehicle and the third vehicle. The vehicle position component 142 can further be configured to receive information/data from the various on-board sensors/cameras 130A-n, as well as provided by algorithms 158A-n (e.g., a computer vision algorithm, digital imagery algorithm, etc.), and the like. The vehicle position component 142 can be configured to receive the above inputs and can generate vehicle position data 144 for further processing by other components of the first vehicle 102.

In embodiments, a sensor component 146 can be included in the TSC 140, wherein the sensor component 146 can be configured to monitor one or more of a variety of conditions via the sensors/cameras 130A-n. For example, the sensors/cameras 130A-n can include the appropriate cameras and/or sensors to receive facial profile data from other drivers of other cars. Moreover, the sensors/cameras 130A-n and/or the sensor component 146 can collect facial profile data 148 that can indicate facial positions (e.g., front-facing or side-facing head positions indicative of driver focus/vision) of a driver driving the second vehicle and/or a driver driving the third vehicle. The sensor component 146 can recognize traffic signals and traffic signs to determine traffic direction information for the associated T-intersection and can communicate with the T-intersection detection component 152.

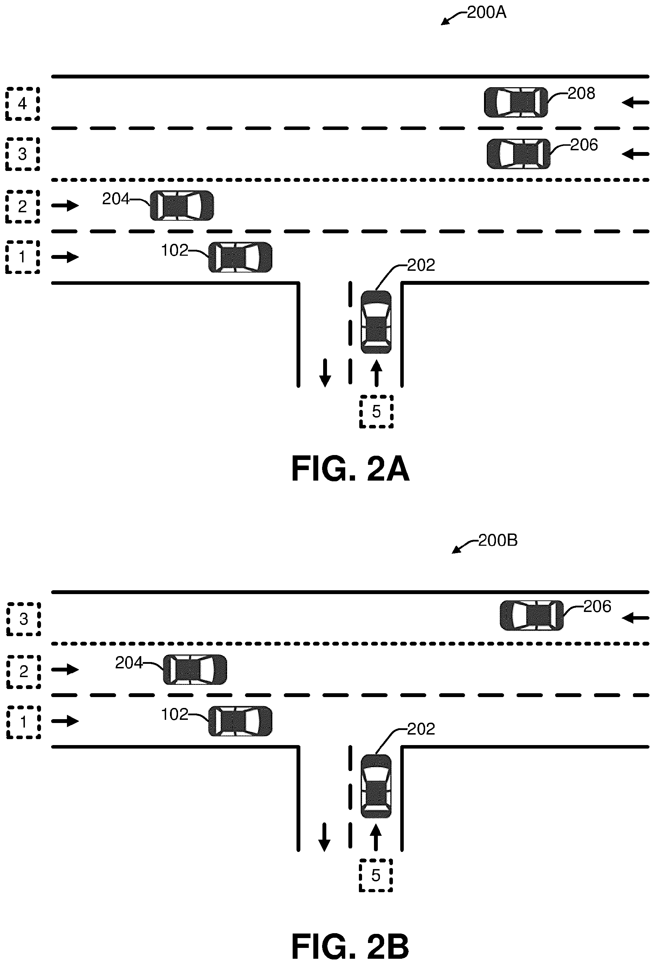

With example embodiments, a T-intersection detection component 152 can be included in the TSC 140, wherein the T-intersection detection component 152 can be configured to detect whether the first vehicle 102 is approaching an appropriate T-intersection (as shown by FIGS. 2A and 2B). The T-intersection detection component 152 can be connected and/or coupled to the navigation component 122 and/or navigation data (e.g., GPS data/map 170) available to the first vehicle 102 that indicates intersections soon to be traversed (e.g.. intersections on the navigation path of the first vehicle 102) by the first vehicle 102. The GPS data/map 170 can include information about maps from a variety of locations traversed by vehicles and the driving rules applicable to the intersections (e.g., traffic signs, traffic lights, etc.).

With embodiments, the T-intersection detection component 152 can be configured to verify the number of lanes and the position of the first vehicle 102 before continuing to prevent a collision within the T-intersection. The T-intersection detection component 152 can be configured to verify that two lanes are directed in a first direction (e.g., parallel to the direction of the first vehicle 102), and at least one lane is directed in a second direction, opposite to the first direction, and opposite to the direction of the first vehicle 102. Additionally, the T-intersection detection component 152 can be configured to verify that the first vehicle 102 (e.g., the at least partially autonomous vehicle) is traveling in the lane most proximate to a lane directed in a third direction (e.g., perpendicular to the direction of the first vehicle 102). Further, the T-intersection detection component 152 can verify that the first vehicle 102 is in the right-most lane of the T-intersection (e.g., via the navigation component 122, the sensors/cameras 103A-n, the vehicle position component 142, the sensor component 146, the T-intersection detection component 152, algorithms 158A-n, and GPS Data/Map 170).

In further embodiments, the TSC 140 can further include a collision prediction component 154, wherein the collision prediction component 154 can be configured to determine whether a collision will occur in the T-intersection between the second vehicle and the third vehicle. The collision prediction component 154 can be configured to process/analyze the vehicle position data 144 generated from the vehicle position component 142, and the facial profile data 148 and the vehicle indicator data 150 generated from the sensor component 146 to determine whether an accident/collision will occur between the second vehicle and the third vehicle. The collision prediction component 154 can determine a vision direction of the drivers of the second vehicle and the third vehicle. The vision direction can indicate whether the drivers of the second vehicle and the third vehicle are looking at the intersection or at other vehicles (e.g., or in any other direction). Further, in embodiments, the collision prediction component 154 can determine if the first vehicle 102 is impeding the vision of the driver of the second vehicle (e.g., if the third vehicle is hidden from the view/vision of the driver of the second vehicle). As such, if the third vehicle is hidden from view, a collision can be likely to occur if the driver of the second vehicle is not looking at the first vehicle 102 or the third vehicle.

With embodiments, the TSC 140 can further include a warming component 156, wherein the warning component 156 can be configured to provide a warning (e.g., perform an action to warn) to alert the second vehicle of a potential danger/accident. In examples, without limitation, the warning can be an audio warning, a visual warning, a haptic feedback warning, or the like. The collision prediction component 154 can be connected/coupled with the warning component 156 as to activate the warning component 156 when an accident is predicted to occur.

In embodiments, the first vehicle 102 can further include a communications component 172 configured to establish and conduct communications with other vehicles on the road, external entities and systems, etc. The first vehicle 102 can establish and conduct communications with the second vehicle and/or the third vehicle to provide an appropriate warning to obtain the attention of the driver in the respective vehicle. In examples, the first vehicle 102 can activate a visual, audio, or physical warning of the second vehicle to alert the driver of a potential accident. The first vehicle 102 can interact with the third vehicle in a similar manner to provide a visual, audio, or physical warning to the driver of the third vehicle.

As shown in FIG. 1, the OCS 110 can further include a processor 112 and a memory 114, wherein the processor 112 can execute the various computer-executable components, functions, operations, etc., presented herein. The memory 114 can be utilized to store the various computer-executable components, functions, code, etc., as well as algorithms 158A-n, T-intersection information/data 198, information regarding a T-intersection location and/or presence of vehicles substantially proximate the intersection, information received from a remotely located system/vehicle, extracted-data, edited-data, and suchlike (as further described herein). In an embodiment, the vehicle operation components 120 can form a standalone component communicatively coupled to the OCS 110, and while not shown, the vehicle operation components 120 can operate in conjunction with a processor (e.g., functionally comparable to processor 112) and a memory (e.g., functionally comparable to memory 114) to enable navigation, steering, braking/acceleration, etc., of the first vehicle 102 to a destination. In another embodiment, the vehicle operation components 120 can operate in conjunction with the processor 112 and memory 114 of the OCS 110, wherein the various control functions (e.g., navigation, steering, braking/acceleration) can be controlled by the OCS 110. Similarly, the T-intersection Safety Component 140 can form a standalone component communicatively coupled to the OCS 110, and while not shown, the TSC 140 can operate in conjunction with a processor (e.g., functionally comparable to processor 112) and a memory (e.g., functionally comparable to memory 114) to enable navigation and vehicle sensing/avoidance during operation of the first vehicle 102 through a T-intersection. In another embodiment, the TSC 140 can operate in conjunction with the processor 112 and memory 114 of the OCS 110, wherein the various vehicle sensing/navigating/avoidance functions can be controlled by the OCS 110. In a further embodiment, the OCS 110, vehicle operation components 120, and the T-intersection safety component 140 (and respective sub-components) can operate using a common processor (e.g., processor 112) and memory (e.g., memory 114).

As further shown, the OCS 110 can include an input/output (I/O) component 116, wherein the I/O component 116 can be a transceiver configured to enable transmission/receipt of information (e.g., T-intersection data, traffic sign data, traffic signal data, and the like) between the OCS 110 and any external system(s) (e.g., external system 199), other vehicles navigating the road, entities administering operation of the road, police force, entities provisioning navigation data (e.g., GPS data), and the like. I/O component 116 can be communicatively coupled, via an antenna 117, to the remotely located devices and systems (e.g., external system 199). Transmission of data and information between the first vehicle 102 (e.g., via antenna 117 and I/O component 116) and the remotely located devices and systems can be via the signals 190A-*n*. Any suitable technology can be utilized to enable the various embodiments presented herein, regarding transmission and receiving of signals 190A-*n*. Suitable technologies include BLUETOOTH^{®}, cellular technology (e.g., 3G, 4G, 5G), internet technology, ethernet technology, ultra-wideband (UWB), DECAWAVE^{®}, IEEE 802.15.4a standard-based technology, Wi-Fi technology, Radio Frequency Identification (RFID), Near Field Communication (NFC) radio technology, and the like.

In an embodiment, the OCS 110 can further include a human-machine interface (HMI) 118 (e.g., a display, a graphical-user interface (GUI)) which can be configured to present various information including imagery of information regarding T-intersections, other vehicles, alarms, warnings, information received from external systems and devices, etc., per the various embodiments presented herein. The HMI 118 can include an interactive display 119 to present the various information (e.g., generated by warning component 156) via various screens presented thereon, and further configured to facilitate input of information/settings/etc., regarding operation of the first vehicle 102.

With embodiments, such as generally illustrated in FIG. 2A and 2B, the T-intersection safety component 140 and/or the T-intersection detection component 152 can determine if the first vehicle 102 is approaching an appropriate (qualifying) T-intersection (200A, 200B). Further, in embodiments, the T-intersection detection component 152 can determine the number of lanes, the direction of lanes, and the presence of vehicles within the lanes (e.g., via the vehicle position component 142), among other things. The T-intersection detection component 152 can be coupled with the navigation component 122, the sensors/cameras 130A-*n*, and the GPS data/map 170. The T-intersection detection component 152 can determine that the T-intersection is an appropriate T-intersection 200A, 200B for collision prevention if the T-intersection includes: (i) the first vehicle 102 occupying a first lane (1) most proximate to an entering lane (5) (e.g., perpendicular to the first lane (1)); (ii) a second lane (2) adjacent to the first lane (1) and including a direction of traffic in the same direction as the first vehicle 102 and the first lane (1); (iii) a third lane (3) adjacent to the second lane (2) and including a direction of traffic in an opposite direction as the first vehicle 102, the first lane (1), and the second lane (2); (iv) the first vehicle 102 is traveling through the T-intersection (e.g., the first vehicle 102 does not perform a turn at the T-intersection); and (v) a second vehicle 202 is occupying the entering lane (5).

In embodiments, such as illustrated by FIG. 2A, an example of an appropriate T-intersection 200A is shown. As described previously, the T-intersection detection component 152 can be configured to determine (e.g., via information received from the navigation component 122, the sensors/cameras 130A-n, and GPS data/map 170, etc.) the number of lanes in the T-intersection, the direction of the lanes of the T-intersection, and the position of the first vehicle 102. As shown in FIG. 2A, the T-intersection detection component 152 can identify an appropriate T-intersection 200A that includes a first lane (1) and a second lane (2) having a direction of travel consistent with the direction of the first vehicle 102. Further, the first vehicle 102 can be traveling in a first direction and the T-intersection detection component 152 can confirm the presence of an adjacent lane (e.g., the second lane) including a direction of travel that is the same as the first lane (1). Further, the T-intersection detection component 152 can be configured to identify opposite lanes of travel to the first vehicle 102. For example and without limitation, the T-intersection detection component 152 can identify a third lane (3) and a fourth lane (4) that include traffic directed in an opposite direction to the first direction. Additionally, the T-intersection detection component 152 can identify/detect lanes perpendicular to the first lane (1) that the first vehicle 102 is traveling in, such as a fifth lane (5) (e.g., the entering lane). The fifth lane (5) can be substantially perpendicular to the first lane (1), the second lane (2), the third lane (3), and the fourth lane (4). With examples, the fifth lane (5) can be disposed at any angle (e.g., perpendicular angles, acute angles, obtuse angles, etc.) relative to the first lane (1), the second lane (2), the third lane (3), and/or the fourth lane (4) to form the T-intersection, such that traffic from the fifth lane (5) enters/merges into the T-intersection. With embodiments, the fifth lane (5) can be a lane that enters the traffic of at least one of the first lane (1), the second lane (2), the third lane (3), or the fourth lane (4). Additionally, the T-intersection detection component 152 can determine if the first vehicle 102 is traveling in the lane most adjacent to the fifth lane (5) (e.g., the lane entering the traffic of the T-intersection) in order to proceed to preventing collisions within appropriate T-intersections 200A, 200B.

In examples, such as generally illustrated by FIG. 2A, the first lane (1) can be occupied by the first vehicle 102. Additionally, a second vehicle 202 can occupy the fifth lane (5), a third vehicle 204 can occupy the second lane (2), a fourth vehicle 206 can occupy the third lane (3), and a fifth vehicle 208 can occupy the fourth lane (4). The T-intersection safety component 140 can prevent a collision between the second vehicle 202 and the third vehicle 204 (e.g., in situations where the third vehicle 204 can be hidden from the view of the driver of second vehicle 202, or where the driver of the second vehicle 202 is looking at the fourth vehicle 206 and/or the fifth vehicle 208 (e.g., or a distracted driver looking away from the road).

With embodiments, such as illustrated by FIG. 2B, an example of another appropriate T-intersection 200B is shown. The T-intersection detection component 152 can identify the first lane (1) and the second lane (2); and further, the T-intersection detection component 152 can determine the position of the first vehicle 102. The T-intersection detection component 152 can confirm that the first vehicle 102 is traveling in the first lane (1), and that the first lane (1) is the lane most proximate/adjacent to the lane entering the traffic of the T-intersection (e.g., the fifth lane 5). In embodiments, the T-intersection detection component 152 can confirm that at least one lane includes traffic directed in an opposite direction to the first lane (1), the second lane (2), and the first vehicle 102.

In examples, as shown in FIG. 2B, the first lane (1) can be occupied by the first vehicle 102. Additionally, a second vehicle 202 can occupy the fifth lane (5), a third vehicle 204 can occupy the second lane (2), and a fourth vehicle 206 can occupy the third lane (3). The T-intersection safety component 140 can prevent a collision between the second vehicle 202 and the third vehicle 204.

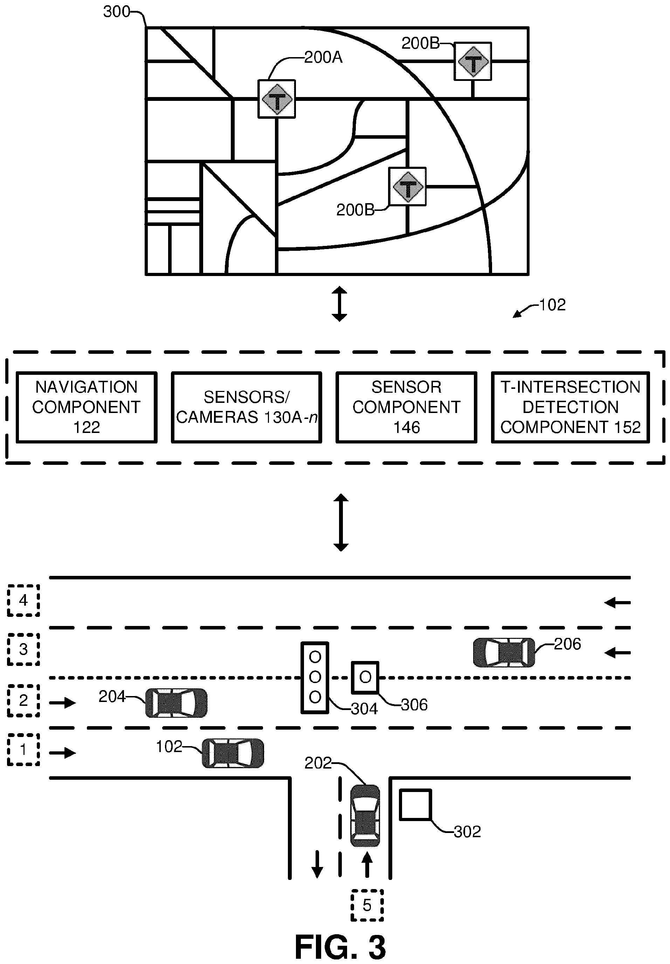

In further embodiments, such as generally illustrated by FIG. 3, the T-intersection detection component 152 can detect an appropriate T-intersection 200A, 200B via information received by the navigation component 122 and the GPS data/map 170. The T-intersection detection component 152 can include a mapping 300 or database of T-intersections that can be considered appropriate T-intersections 200A, 200B. The T-intersection detection component 152 can determine an appropriate T-intersection 200A, 200B based upon a planned course or navigation path of the first vehicle 102.

With examples, the T-intersection detection component 152 can be configured to identify one or more various traffic direction indicators. For example and without limitation, traffic direction indicators can include any variety of stoplights, traffic signs, caution lights, and the like. For example, as shown in FIG. 3, the T-intersection detection component 152 can identify a conventional stop light 304 (e.g., including a red indicator light, a yellow indicator light, and a green indicator light), a warning/caution light 306 (e.g., including a yellow indicator light), and a traffic sign 308 (e.g., a stop sign or yield sign or the like). The T-intersection detection component 152 can determine the operating nature of the T-intersection 200A, 200B; for example, the directions that the one or more vehicles approaching the T-intersection are instructed to follow.

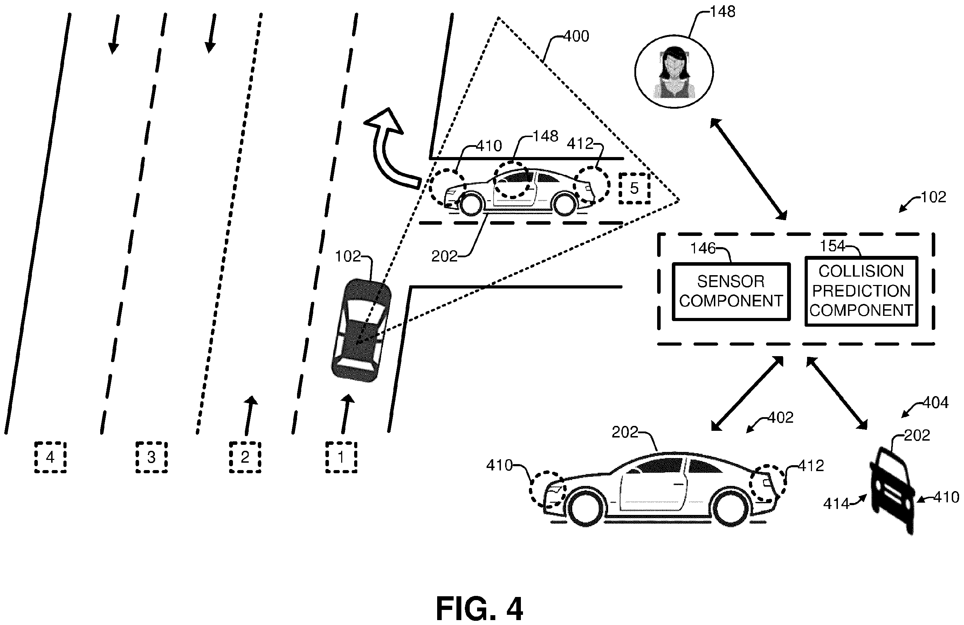

In embodiments, such as generally shown in FIG. 4, the T-intersection detection component 152 can be configured to determine a driving intent of the driver of the second vehicle 202 by detecting whether one or more indicator lights of the second vehicle 202 are active. For example, the indicator lights can indicate that the second vehicle 202 intends to turn left, to turn right, and/or to wait in idle. The TSC 140 can sense/determine the active indicator lights of the second vehicle 202 within a field of vision 400 of the first vehicle 102 (e.g., via the sensors/cameras 130A-n and/or the sensor component 146) as shown in FIG. 4.

In examples, such as shown in FIG. 4, the T-intersection detection component 152 can receive information from the sensor component 146 to determine the indicator lights (e.g., vehicle indicator data 150) of the second vehicle 202. As further indicated in FIG. 4, sensor component 146 can determine if any indicator lights are active on the second vehicle 202 from a first view 402 and a second view 404. The sensor component 146 can monitor the indicator lights of the second vehicle 202 at the first view 402 to determine if a front-left indicator light 410 is active and/or if a rear-left indicator light 412 is active. The sensor component 146 can be configured to recognize a change in brightness for one or more indicator lights to signify that the respective indicator light is active. Further, if the sensor component 146 does not detect the front-left indicator light 410 is activated, then the T-intersection detection component 152 can determine that the driver of the second vehicle 202 does not intend to turn left into the third lane (3) or the fourth lane (4). Additionally, if the sensor component 146 detects that the front-left indicator light 410 and the rear-left indicator light 412 are activate (blinking), the T-intersection detection component 152 can receive data from the second view 404 to confirm other indicator lights are active indicating that the hazard lights of the second vehicle 202 are active (e.g., which can signify that the second vehicle 202 does not intend to move). Further, if no additional indicator lights are sensed in the second view 404, the TSC 140 can determine that the second vehicle 202 intends to turn left into the T-intersection.

With embodiments, such as illustrated in FIG. 4, the sensor component 146 can determine if indicator lights are active on the second vehicle 202 from the second view 404. The second view 404 can be sensed when the first vehicle 102 is disposed closer to the second vehicle 202 than when the first view 402 is sensed (e.g., as the first vehicle 102 is approaching the second vehicle 202). In examples, the sensor component 146 can detect if the front-right indicator light 414 is activated or if the front-left indicator light 410 is activated from the perspective of the second view 404. If the sensor component 146 determines that the front-right indicator light 414 is active (and the other indicator lights 410, 412 are not active), the T-intersection detection component 152 can determine that the second vehicle 202 intends to turn right and into the first lane (1) that is occupied by the first vehicle 102. Additionally, the sensor component 146 can confirm previously sensed indicator lights from the first view 402 by comparing with the sensed indicator lights from the second view 404 (e.g., when the first vehicle 102 is disposed closer to the second vehicle 202). For example, if the sensor component 146 senses the front-left indicator light 410 active in the first view 402, the sensor component 146 can confirm activation of the front-left indicator light 410 in the second view 404. In examples, where the first vehicle 102 is traveling in the first lane (1) and the sensor component 146 determines that the second vehicle 202 (e.g., via the vehicle indicator data 150) indicates an intent to turn right as to enter the same lane as the first vehicle 102, the TSC 140 can continue operating without considering if a third vehicle 204 not visible to the driver of the second vehicle 202. If the TSC 140 determines the second vehicle 202 intends to turn right, the first vehicle 102 can activate a timer to allow the second vehicle 202 to perform a merge into the first lane (1). The first vehicle 102 can reduce speed, flash indicator lights, and wait a period of time (e.g., about 3 seconds or more or less) for the second vehicle 202 to merge. If the second vehicle 202 indicates no movement in the period of time, the first vehicle 102 can resume travel in the first lane (1) without slowing to allow the second vehicle 202 in the first lane (1). In additional examples, where the first vehicle 102 is traveling in the first lane (1) and the sensor component 146 determines that the second vehicle 202 (e.g., via the indicator data) indicates an intent to turn left or an intent to wait (e.g., hazard lights), the TSC 140 can continue operating and can consider if a third vehicle 204 is not visible to the driver of the second vehicle 202.

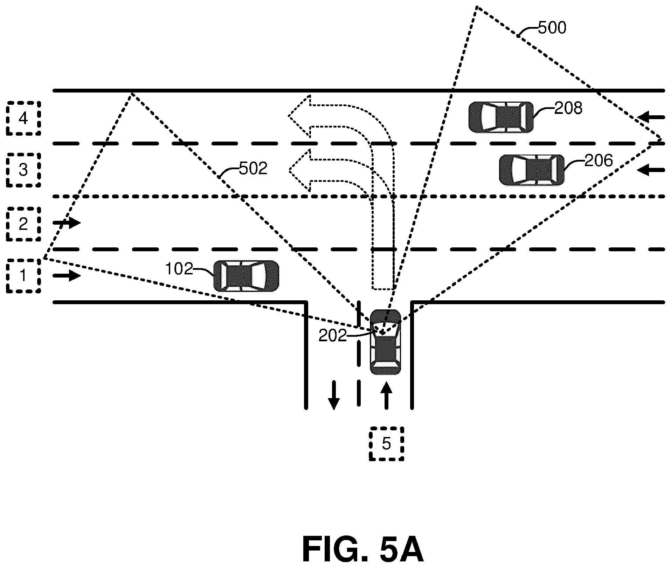

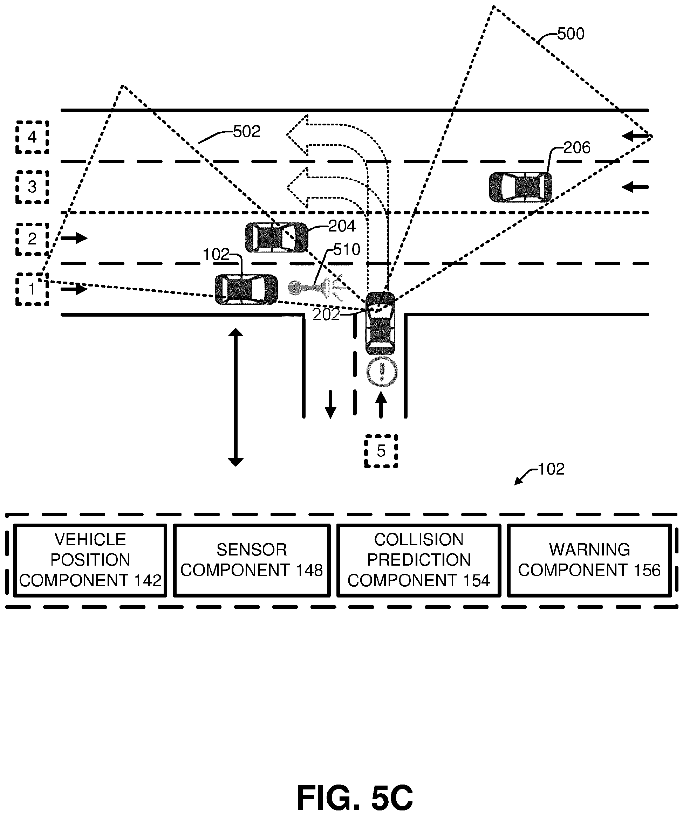

In embodiments, such as further illustrated in FIG. 4 and 5A, the sensor component 146 can generate/collect facial profile data 148 reflecting a vision direction (e.g., a head position) of the driver of the second vehicle 202. Further, the sensor component 146 can identify the vision direction of the driver by detecting either a front-profile or a side-profile. The sensor component 146 can utilize the various on-board sensors/cameras 130A-n, as well as provided by algorithms 158A-n (e.g., a computer vision algorithm, digital imagery algorithm, and suchlike) to determine the vision direction of the driver of the second vehicle 202. In examples, if the sensor component 146 detects a front-profile of the driver of the second vehicle 202, the TSC 140 can determine that the second vehicle 202 intends to turn right as to enter the same lane as the first vehicle 102 (e.g., where the second vehicle 202 is looking for traffic traveling in the first lane (1) such as not to cause a collision when merging). Sensing a front-profile can signify that the vision direction of the second vehicle 202 is directed towards the first vehicle 102 (e.g., shown via second vision direction 502). In additional embodiments, if the sensor component 146 does not detect a profile of the driver or detects a side-profile of the driver of the second vehicle 202, the TSC 140 can determine that the second vehicle 202 intends to turn left as to enter the third lane (3) or the fourth lane (4) (e.g., where the second vehicle 202 is looking for traffic traveling in the third lane (3) or the fourth lane (4) such as not to cause a collision when turning left as shown via first vision direction 500). If the TSC 140 determines that the driver of the second vehicle 202 intends to turn left, the TSC 140 can communicate with the vehicle position component 142 and the sensor component 146 to identify hidden vehicles (e.g., vehicles not visible to the driver of the second vehicle 202).

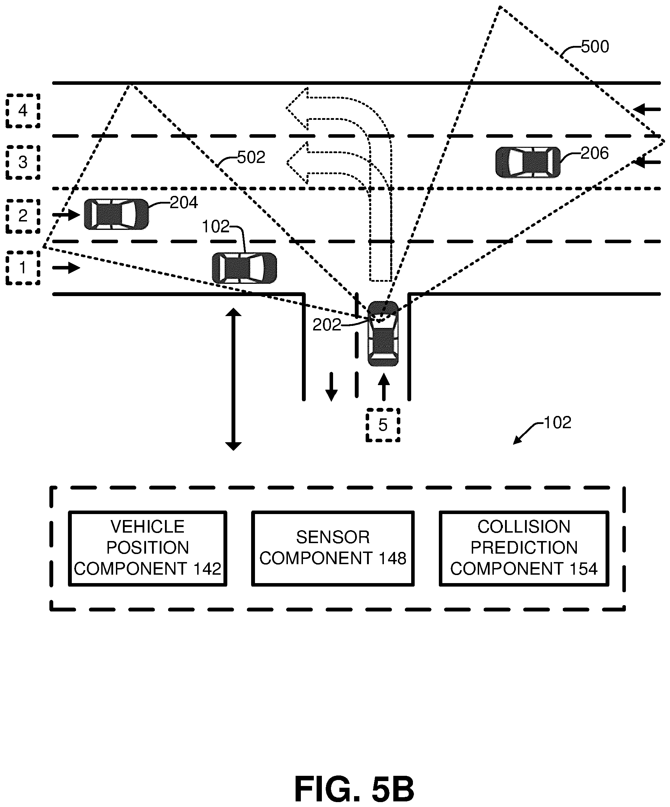

Turning next to FIG. 5B, the vehicle position component 142 and the sensor component 146 can identify whether vehicles are hidden from view of the driver of the second vehicle 202. The sensor component 146 can scan/search for vehicles that are disposed in the second lane (2). Vehicles present in the second lane (2) and positioned behind the first vehicle 102 can be hidden from view of the driver of the second vehicle 202 and can pose a substantial risk of safety at the T-intersection. For example, if the driver of the second vehicle 202 does not see the third vehicle 204, an accident can be likely to occur between the second vehicle 202 and the third vehicle 204 should the second vehicle 202 proceed to turn into the third lane (3) or the fourth lane (4). The TSC 140 can communicate with the vehicle position component 142, the sensor component 146, and the collision prediction component 154 to determine position, velocity, and projected path of the third vehicle 204 to analyze if the third vehicle 204 is likely to collide with the second vehicle 202, should the second vehicle 202 proceed into the T-intersection. Further, in additional embodiments, the TSC 140 can determine in a similar manner if the first vehicle 102 impedes the vision of the driver of the third vehicle 204, such that the third vehicle 204 does not see the second vehicle 202 traverse into the T-intersection (e.g., at least partially impeding the direction the third vehicle 204). The vehicle position component 142 and the collision prediction component 154 can determine, by the positions and velocities of the vehicles 102, 202, 204, if the first vehicle 102 at least partially impedes the vision of the driver of the second vehicle 202 such that the third vehicle 204 is not visible, or is partially visible, from the second vision direction 502).

With embodiments, if the TSC 140 does not detect a front-profile or a side-profile of the driver of the second vehicle 202, and the second vehicle 202 is moving towards/into the T-intersection without the driver of the third vehicle 204 reducing speed (e.g., as sensed via the vehicle position component 142), the TSC 140 can determine that an accident is likely to occur between the second vehicle 202 and the third vehicle 204. Additionally, the TSC 140 can determine if the third vehicle 204 will traverse through the T-intersection within a period of time (e.g., a duration of about three seconds or more or less) such that the path of the third vehicle 204 intersects the path of the second vehicle 202 (e.g., indicating that an accident is likely to occur within the T-intersection). Further, the TCS 140 can be configured to perform an action (e.g., via the warning component 156) to prevent a collision within the T-intersection. The action can be one or more of a variety of warnings 510 to obtain the attention of the driver of the second vehicle 202 so the second vehicle 202 can stop to avoid a collision with the third vehicle 204 before entering the T-intersection. In examples, the warning 510 can be an audio warning (e.g., a vehicle honk, vehicle alarm, etc.), a visual warning (e.g., flashing of vehicle lights/indicators within the first vehicle 102, the second vehicle 202, or the third vehicle 204), or a physical warning (e.g., steering wheel and/or seat vibration indicator) to alert the second vehicle 202 of potential danger. With examples, the TSC 140 can activate any variety of audio warnings, visual warnings, or physical warnings to alert the second vehicle 202 and the third vehicle 204 of the potential collision. The second vehicle 202 or the third vehicle 204 can change speed/path in response to receiving the warning to avoid the accident.

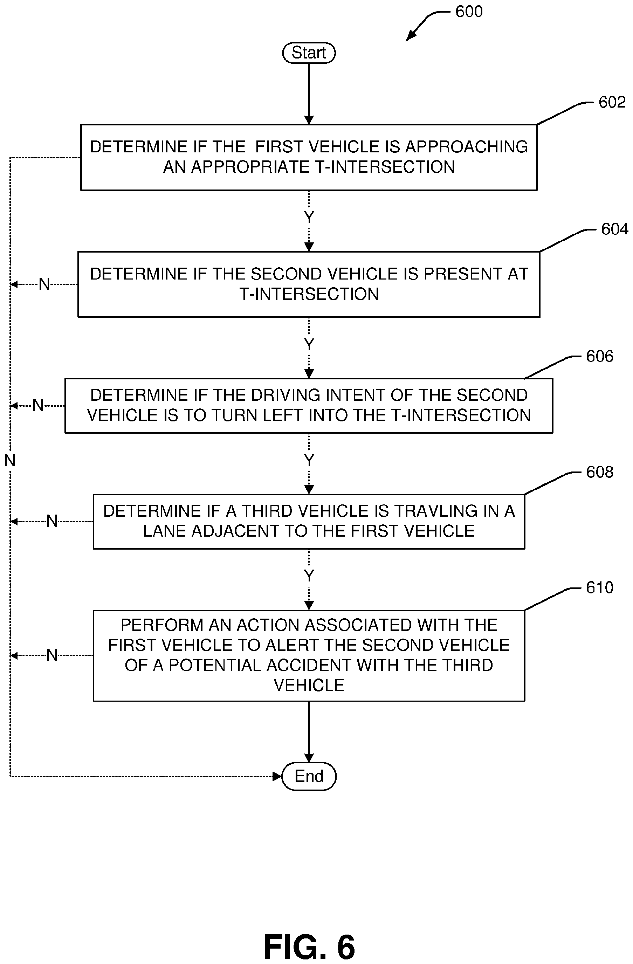

FIG. 6 illustrates a flow diagram 600 for a computer-implemented methodology for a first vehicle 102, driven at least partially autonomously to prevent an accident within a T-intersection using predictive collision avoidance between a second vehicle 202 and a third vehicle 204, in accordance with at least one embodiment.

At 602, the computer-implemented method 600 can comprise determining if the first vehicle 102 is approaching an appropriate T-intersection 200A, 200B. The method 600 can include determining (e.g., via the navigation component 122, the sensors/cameras 130A-n, the vehicle position component 142, the sensor component 146, and the T-intersection detection component 152) if the first vehicle 102 is occupying the first lane (1) most proximate to an entering lane (5) (e.g., perpendicular to the first lane (1)). The method 600 can further include determining if a second lane (2) is adjacent to the first lane (1) and includes a direction of traffic/travel in the same direction as the direction of the first vehicle 102 and the first lane (1). Additionally, the method 600 can comprise determining if a third lane (3) is adjacent to the second lane (2) and includes a direction of traffic/travel in an opposite direction as the first vehicle 102, the first lane (1), and the second lane (2). The T-intersection detection component 152 can determine if the first vehicle 102 is traveling through the T-intersection (e.g., where the first vehicle 102 does not perform a turn at the T-intersection) and the second vehicle 202 is occupying the entering lane (5), such as ready to traverse into the T-intersection.

At 604, if the T-intersection can be identified as an appropriate T-intersection 200A, 200B (step 602), the method 600 can comprise determining if the second vehicle 202 is present at the T-intersection. Further, the TSC 140 can confirm that the second vehicle 202 is disposed at/in the T-intersection via the vehicle position component 142 and/or the vehicle position data 144.

At 606, if second vehicle 202 is at the T-intersection, the method 600 can comprise determining the driving intent of the driver of the second vehicle 202. The TSC 140 can collect facial profile data 148 and vehicle indicator data 150 to determine the direction that the driver of the second vehicle 202 intends to traverse towards.

At 608, if the TSC 140 determines that the driver of the second vehicle 202 intends to conduct a left-turn into the T-intersection, the method 600 can include determining if a third vehicle 204 is traveling in a lane adjacent to the first vehicle 102 and in the same direction as the first vehicle 102.

At 610, if a third vehicle 204 is traveling in a lane adjacent to the first vehicle 102, the method 600 can comprise performing an action associated with the first vehicle 102 to alert the second vehicle 202 of a potential accident with the third vehicle 204.

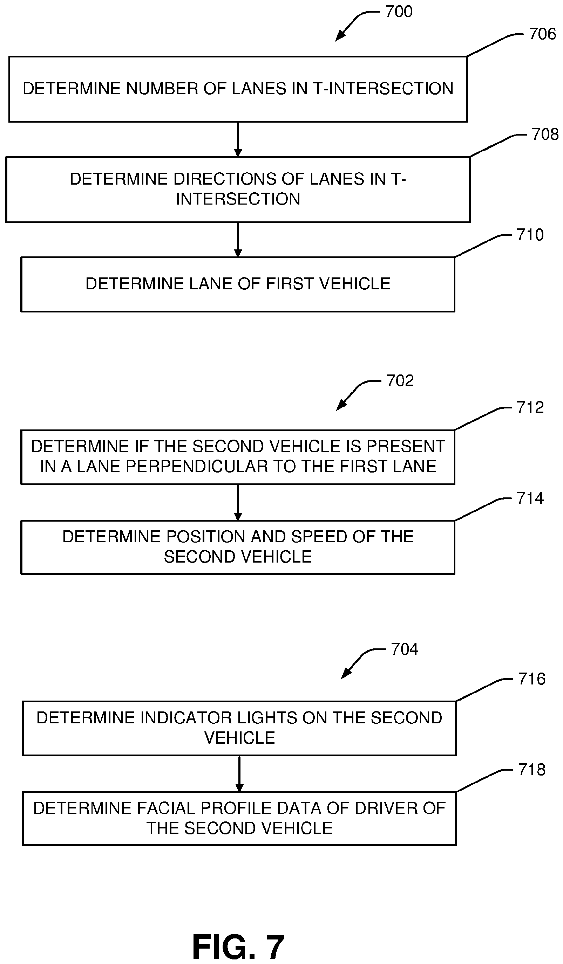

FIG. 7, illustrates flow diagrams 700, 702, and 704 associated with the method 600 of preventing accidents in a T-intersection using predictive collision avoidance. Flow diagram 700 includes further steps associated with step 602; flow diagram 702 includes further steps associated with step 604; and flow diagram 704 includes further steps associated with step 606.

Flow diagram 700 illustrates additional steps associated with step 602 of determining if the first vehicle 102 is approaching an appropriate T intersection. The method 600 can comprise, at 706, determining the number of lanes in the T-intersection. The method 600 can further comprise at 708, determining the directions of lanes in the T-intersection; and, at 710, determining the lane that the first vehicle 102 is occupying.

Flow diagram 702 illustrates additional steps associated with step 604 of determining if a second vehicle 202 is present at the T-intersection. Further, the method 600 can comprise, at 712, determining if the second vehicle 202 is present in a lane perpendicular (e.g., or lane that merges into the T-intersection at any angle) to the first lane (1). Additionally, the method 600 can include determining a position and speed of the second vehicle 202.

Flow diagram 704 illustrates additional steps associated with determining the driving intent of the driver of the second vehicle 202. Further, the method 600 can comprise, at step 716, determining indicator lights on the second vehicle 202, which can include identifying activated blinkers/indicator lights (e.g., vehicle indicator data 150) to identify the intended driving direction of the second vehicle 202. The method 600 can comprise, at step 718, determining facial profile data 148 of the driver of the second vehicle 202. The TSC 140 can gather facial profile data 148 and vehicle indicator data 150 (e.g., via the sensor component 146 and/or sensors/cameras 130A*n*) in determining the driving direction of the second vehicle 202.

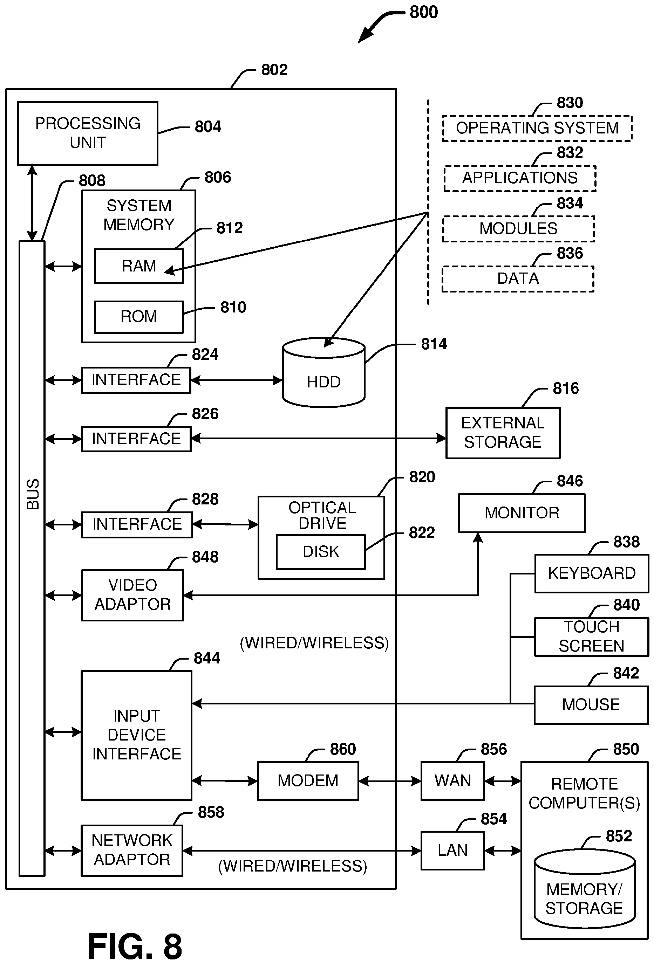

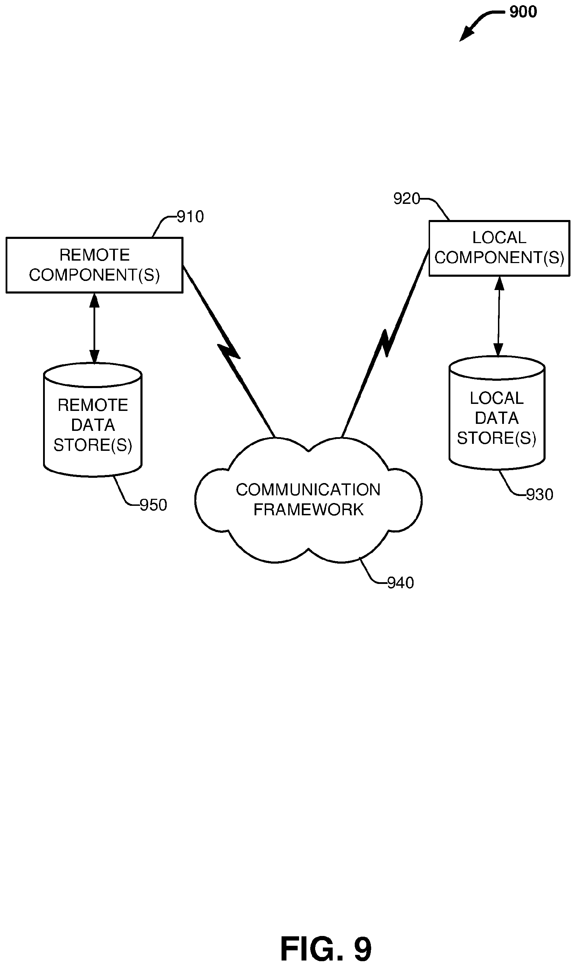

Turning next to FIGS. 8 and 9, a detailed description is provided of additional context for the one or more embodiments described herein with FIGS. 1-7.

In order to provide additional context for various embodiments described herein, FIG. 8 and the following discussion are intended to provide a brief, general description of a suitable computing environment 800 in which the various embodiments described herein can be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, etc., that perform particular tasks or implement particular abstract data types. Moreover, those skilled in the art will appreciate that the methods can be practiced with other computer system configurations, including single-processor or multiprocessor computer systems, minicomputers, mainframe computers, IoT devices, distributed computing systems, as well as personal computers, hand-held computing devices, microprocessor-based or programmable consumer electronics, and the like, each of which can be operatively coupled to one or more associated devices.

The embodiments illustrated herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 8, the example environment 800 for implementing various embodiments of the aspects described herein includes a computer 802, the computer 802 including a processing unit 804, a system memory 806 and a system bus 808. The system bus 808 couples system components including, but not limited to, the system memory 806 to the processing unit 804. The processing unit 804 can be any of various commercially available processors and may include a cache memory. Dual microprocessors and other multi processor architectures can also be employed as the processing unit 804.

The system bus 808 can be any of several types of bus structure that can further interconnect to a memory bus (with or without a memory controller), a peripheral bus, and a local bus using any of a variety of commercially available bus architectures. The system memory 806 includes ROM 810 and RAM 812. A basic input/output system (BIOS) can be stored in a nonvolatile memory such as ROM, erasable programmable read only memory (EPROM), EEPROM, which BIOS contains the basic routines that help to transfer information between elements within the computer 802, such as during startup. The RAM 812 can also include a high-speed RAM such as static RAM for caching data.

The computer 802 further includes an internal hard disk drive (HDD) 814 (e.g., EIDE, SATA), one or more external storage devices 816 (e.g., a magnetic floppy disk drive (FDD) 816, a memory stick or flash drive reader, a memory card reader, etc.) and an optical disk drive 820 (e.g., which can read or write from a CD-ROM disc, a DVD, a BD, etc.). While the internal HDD 814 is illustrated as located within the computer 802, the internal HDD 814 can also be configured for external use in a suitable chassis (not shown). Additionally, while not shown in environment 800, a solid-state drive (SSD) could be used in addition to, or in place of, an HDD 814. The HDD 814, external storage device(s) 816 and optical disk drive 820 can be connected to the system bus 808 by an HDD interface 824, an external storage interface 826 and an optical drive interface 828, respectively. The interface 824 for external drive implementations can include at least one or both of Universal Serial Bus (USB) and Institute of Electrical and Electronics Engineers (IEEE) 894 interface technologies. Other external drive connection technologies are within contemplation of the embodiments described herein.

The drives and their associated computer-readable storage media provide nonvolatile storage of data, data structures, computer-executable instructions, and so forth. For the computer 802, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 812, including an operating system 830, one or more application programs 832, other program modules 834 and program data 836. All or portions of the operating system, applications, modules, and/or data can also be cached in the RAM 812. The systems and methods described herein can be implemented utilizing various commercially available operating systems or combinations of operating systems.

Computer 802 can optionally comprise emulation technologies. For example, a hypervisor (not shown) or other intermediary can emulate a hardware environment for operating system 830, and the emulated hardware can optionally be different from the hardware illustrated in FIG. 8. In such an embodiment, operating system 830 can comprise one virtual machine (VM) of multiple VMs hosted at computer 802. Furthermore, operating system 830 can provide runtime environments, such as the Java runtime environment or the .NET framework, for applications 832. Runtime environments are consistent execution environments that allow applications 832 to run on any operating system that includes the runtime environment. Similarly, operating system 830 can support containers, and applications 832 can be in the form of containers, which are lightweight, standalone, executable packages of software that include, e.g., code, runtime, system tools, system libraries and settings for an application.

Further, computer 802 can comprise a security module, such as a trusted processing module (TPM). For instance with a TPM, boot components hash next in time boot components, and wait for a match of results to secured values, before loading a next boot component. This process can take place at any layer in the code execution stack of computer 802, e.g., applied at the application execution level or at the operating system (OS) kernel level, thereby enabling security at any level of code execution.

A user can enter commands and information into the computer 802 through one or more wired/wireless input devices, e.g., a keyboard 838, a touch screen 840, and a pointing device, such as a mouse 842. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 804 through an input device interface 844 that can be coupled to the system bus 808, but can be connected by other interfaces, such as a parallel port, an IEEE 894 serial port, a game port, a USB port, an IR interface, a BLUETOOTH^{®} interface, etc.

A monitor 846 or other type of display device can be also connected to the system bus 808 via an interface, such as a video adapter 848. In addition to the monitor 846, a computer typically includes other peripheral output devices (not shown), such as speakers, printers, etc.

The computer 802 can operate in a networked environment using logical connections via wired and/or wireless communications to one or more remote computers, such as a remote computer(s) 850. The remote computer(s) 850 can be a workstation, a server computer, a router, a personal computer, portable computer, microprocessor-based entertainment appliance, a peer device or other common network node, and typically includes many or all of the elements described relative to the computer 802, although, for purposes of brevity, only a memory/storage device 852 is illustrated. The logical connections depicted include wired/wireless connectivity to a local area network (LAN) 854 and/or larger networks, e.g., a wide area network (WAN) 856. Such LAN and WAN networking environments are commonplace in offices and companies, and facilitate enterprise-wide computer networks, such as intranets, all of which can connect to a global communications network, e.g., the internet.

When used in a LAN networking environment, the computer 802 can be connected to the local network 854 through a wired and/or wireless communication network interface or adapter 858. The adapter 858 can facilitate wired or wireless communication to the LAN 854, which can also include a wireless access point (AP) disposed thereon for communicating with the adapter 858 in a wireless mode.

When used in a WAN networking environment, the computer 802 can include a modem 860 or can be connected to a communications server on the WAN 856 via other means for establishing communications over the WAN 856, such as by way of the internet. The modem 860, which can be internal or external and a wired or wireless device, can be connected to the system bus 808 via the input device interface 844. In a networked environment, program modules depicted relative to the computer 802 or portions thereof, can be stored in the remote memory/storage device 852. It will be appreciated that the network connections shown are example and other means of establishing a communications link between the computers can be used.

When used in either a LAN or WAN networking environment, the computer 802 can access cloud storage systems or other network-based storage systems in addition to, or in place of, external storage devices 816 as described above. Generally, a connection between the computer 802 and a cloud storage system can be established over a LAN 854 or WAN 856 e.g., by the adapter 858 or modem 860, respectively. Upon connecting the computer 802 to an associated cloud storage system, the external storage interface 826 can, with the aid of the adapter 858 and/or modem 860, manage storage provided by the cloud storage system as it would other types of external storage. For instance, the external storage interface 826 can be configured to provide access to cloud storage sources as if those sources were physically connected to the computer 802.

The computer 802 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

The above description includes non-limiting examples of the various embodiments. It is, of course, not possible to describe every conceivable combination of components or methodologies for purposes of describing the disclosed subject matter, and one skilled in the art may recognize that further combinations and permutations of the various embodiments are possible. The disclosed subject matter is intended to embrace all such alterations, modifications, and variations that fall within the spirit and scope of the appended claims.

Referring now to details of one or more elements illustrated at FIG. 9, an illustrative cloud computing environment 900 is depicted. FIG. 9 is a schematic block diagram of a computing environment 900 with which the disclosed subject matter can interact. The system 900 comprises one or more remote component(s) 910. The remote component(s) 910 can be hardware and/or software (e.g., threads, processes, computing devices). In some embodiments, remote component(s) 910 can be a distributed computer system, connected to a local automatic scaling component and/or programs that use the resources of a distributed computer system, via communication framework 940. Communication framework 940 can comprise wired network devices, wireless network devices, mobile devices, wearable devices, radio access network devices, gateway devices, femtocell devices, servers, etc.

The system 900 also comprises one or more local component(s) 920. The local component(s) 920 can be hardware and/or software (e.g., threads, processes, computing devices). In some embodiments, local component(s) 920 can comprise an automatic scaling component and/or programs that communicate / use the remote resources 910 and 920, etc., connected to a remotely located distributed computing system via communication framework 940.

One possible communication between a remote component(s) 910 and a local component(s) 920 can be in the form of a data packet adapted to be transmitted between two or more computer processes. Another possible communication between a remote component(s) 910 and a local component(s) 920 can be in the form of circuit-switched data adapted to be transmitted between two or more computer processes in radio time slots. The system 900 comprises a communication framework 940 that can be employed to facilitate communications between the remote component(s) 910 and the local component(s) 920, and can comprise an air interface, e.g., Uu interface of a UMTS network, via a long-term evolution (LTE) network, etc. Remote component(s) 910 can be operably connected to one or more remote data store(s) 950, such as a hard drive, solid state drive, SIM card, device memory, etc., that can be employed to store information on the remote component(s) 910 side of communication framework 940. Similarly, local component(s) 920 can be operably connected to one or more local data store(s) 930, that can be employed to store information on the local component(s) 920 side of communication framework 940.

With regard to the various functions performed by the above described components, devices, circuits, systems, etc., the terms (including a reference to a "means") used to describe such components are intended to also include, unless otherwise indicated, any structure(s) which performs the specified function of the described component (e.g., a functional equivalent), even if not structurally equivalent to the disclosed structure. In addition, while a particular feature of the disclosed subject matter may have been disclosed with respect to only one of several implementations, such feature may be combined with one or more other features of the other implementations as may be desired and advantageous for any given or particular application.

The terms "exemplary" and/or "demonstrative" as used herein are intended to mean serving as an example, instance, or illustration. For the avoidance of doubt, the subject matter disclosed herein is not limited by such examples. In addition, any aspect or design described herein as "exemplary" and/or "demonstrative" is not necessarily to be construed as preferred or advantageous over other aspects or designs, nor is it meant to preclude equivalent structures and techniques known to one skilled in the art. Furthermore, to the extent that the terms "includes," "has," "contains," and other similar words are used in either the detailed description or the claims, such terms are intended to be inclusive - in a manner similar to the term "comprising" as an open transition word - without precluding any additional or other elements.

The term "or" as used herein is intended to mean an inclusive "or" rather than an exclusive "or." For example, the phrase "A or B" is intended to include instances of A, B, and both A and B. Additionally, the articles "a" and "an" as used in this application and the appended claims should generally be construed to mean "one or more" unless either otherwise specified or clear from the context to be directed to a singular form.

The term "set" as employed herein excludes the empty set, i.e., the set with no elements therein. Thus, a "set" in the subject disclosure includes one or more elements or entities. Likewise, the term "group" as utilized herein refers to a collection of one or more entities.

The terms "first," "second," "third," and so forth, as used in the claims, unless otherwise clear by context, is for clarity only and doesn't otherwise indicate or imply any order in time. For instance, "a first determination," "a second determination," and "a third determination," does not indicate or imply that the first determination is to be made before the second determination, or vice versa, etc.

As used in this disclosure, in some embodiments, the terms "component," "system" and the like are intended to refer to, or comprise, a computer-related entity or an entity related to an operational apparatus with one or more specific functionalities, wherein the entity can be either hardware, a combination of hardware and software, software, or software in execution. As an example, a component can be, but is not limited to being, a process running on a processor, a processor, an object, an executable, a thread of execution, computer-executable instructions, a program, and/or a computer. By way of illustration and not limitation, both an application running on a server and the server can be a component.

One or more components can reside within a process and/or thread of execution and a component can be localized on one computer and/or distributed between two or more computers. In addition, these components can execute from various computer readable media having various data structures stored thereon. The components can communicate via local and/or remote processes such as in accordance with a signal having one or more data packets (e.g., data from one component interacting with another component in a local system, distributed system, and/or across a network such as the internet with other systems via the signal). As another example, a component can be an apparatus with specific functionality provided by mechanical parts operated by electric or electronic circuitry, which is operated by a software application or firmware application executed by a processor, wherein the processor can be internal or external to the apparatus and executes at least a part of the software or firmware application. As yet another example, a component can be an apparatus that provides specific functionality through electronic components without mechanical parts, the electronic components can comprise a processor therein to execute software or firmware that confers at least in part the functionality of the electronic components. While various components have been illustrated as separate components, it will be appreciated that multiple components can be implemented as a single component, or a single component can be implemented as multiple components, without departing from example embodiments.

The term "facilitate" as used herein is in the context of a system, device or component "facilitating" one or more actions or operations, in respect of the nature of complex computing environments in which multiple components and/or multiple devices can be involved in some computing operations. Non-limiting examples of actions that may or may not involve multiple components and/or multiple devices comprise transmitting or receiving data, establishing a connection between devices, determining intermediate results toward obtaining a result, etc. In this regard, a computing device or component can facilitate an operation by playing any part in accomplishing the operation. When operations of a component are described herein, it is thus to be understood that where the operations are described as facilitated by the component, the operations can be optionally completed with the cooperation of one or more other computing devices or components, such as, but not limited to, sensors, antennae, audio and/or visual output devices, other devices, etc.

Further, the various embodiments can be implemented as a method, apparatus or article of manufacture using standard programming and/or engineering techniques to produce software, firmware, hardware, or any combination thereof to control a computer to implement the disclosed subject matter. The term "article of manufacture" as used herein is intended to encompass a computer program accessible from any computer-readable (or machine-readable) device or computer-readable (or machine-readable) storage/communications media. For example, computer readable storage media can comprise, but are not limited to, magnetic storage devices (e.g., hard disk, floppy disk, magnetic strips), optical disks (e.g., compact disk (CD), digital versatile disk (DVD)), smart cards, and flash memory devices (e.g., card, stick, key drive). Of course, those skilled in the art will recognize many modifications can be made to this configuration without departing from the scope or spirit of the various embodiments.

Moreover, terms such as "mobile device equipment," "mobile station," "mobile," "subscriber station," "access terminal," "terminal," "handset," "communication device," "mobile device" (and/or terms representing similar terminology) can refer to a wireless device utilized by a subscriber or mobile device of a wireless communication service to receive or convey data, control, voice, video, sound, gaming or substantially any data-stream or signaling-stream. The foregoing terms are utilized interchangeably herein and with reference to the related drawings. Likewise, the terms "access point (AP)," "Base Station (BS)," "BS transceiver," "BS device," "cell site," "cell site device," "gNode B (gNB)," "evolved Node B (eNode B, eNB)," "home Node B (HNB)" and the like, refer to wireless network components or appliances that transmit and/or receive data, control, voice, video, sound, gaming or substantially any data-stream or signaling-stream from one or more subscriber stations. Data and signaling streams can be packetized or frame-based flows.

Furthermore, the terms "device," "communication device," "mobile device," "subscriber," "client entity," "consumer," "client entity," "entity" and the like are employed interchangeably throughout, unless context warrants particular distinctions among the terms. It should be appreciated that such terms can refer to human entities or automated components supported through artificial intelligence (e.g., a capacity to make inference based on complex mathematical formalisms), which can provide simulated vision, sound recognition and so forth.

It should be noted that although various aspects and embodiments are described herein in the context of 5G or other next generation networks, the disclosed aspects are not limited to a 5G implementation, and can be applied in other network next generation implementations, such as sixth generation (6G), or other wireless systems. In this regard, aspects or features of the disclosed embodiments can be exploited in substantially any wireless communication technology. Such wireless communication technologies can include universal mobile telecommunications system (UMTS), global system for mobile communication (GSM), code division multiple access (CDMA), wideband CDMA (WCMDA), CDMA2000, time division multiple access (TDMA), frequency division multiple access (FDMA), multi-carrier CDMA (MC-CDMA), single-carrier CDMA (SC-CDMA), single-carrier FDMA (SC-FDMA), orthogonal frequency division multiplexing (OFDM), discrete Fourier transform spread OFDM (DFT-spread OFDM), filter bank based multi-carrier (FBMC), zero tail DFT-spread-OFDM (ZT DFT-s-OFDM), generalized frequency division multiplexing (GFDM), fixed mobile convergence (FMC), universal fixed mobile convergence (UFMC), unique word OFDM (UW-OFDM), unique word DFT-spread OFDM (UW DFT-Spread-OFDM), cyclic prefix OFDM (CP-OFDM), resource-block-filtered OFDM, wireless fidelity (Wi-Fi), worldwide interoperability for microwave access (WiMAX), wireless local area network (WLAN), general packet radio service (GPRS), enhanced GPRS, third generation partnership project (3GPP), long term evolution (LTE), 5G, third generation partnership project 2 (3 GPP2), ultra-mobile broadband (UMB), high speed packet access (HSPA), evolved high speed packet access (HSPA+), high-speed downlink packet access (HSDPA), high-speed uplink packet access (HSUPA), Zigbee, or another institute of electrical and electronics engineers (IEEE) 802.12 technology.

While not an exhaustive listing, summarizing various embodiments, but not all embodiments, presented herein:
1. A system onboard a first vehicle driven at least partially autonomously, the system comprising: a processor that executes computer-executable components stored in a non-transitory computer-readable memory, the computer-executable components comprising: a vehicle position component that determines vehicle position data indicating position and velocity of a second vehicle and a third vehicle proximate a T-intersection; a sensor component that captures facial profile data indicating a facial profile of a driver of the second vehicle and captures vehicle indicator data of the second vehicle; and a collision prediction component that determines whether a collision will occur in the T-intersection between the second vehicle and the third vehicle based on the vehicle position data, the facial profile data, and the vehicle indicator data, wherein if the collision prediction component predicts the collision to occur within the T-intersection, the collision prediction component performs an action associated with the first vehicle to alert the second vehicle of a potential accident with the third vehicle.
2. The system of clause 1, wherein the sensor component determines whether the first vehicle is approaching the T-intersection.
3. The system of clause 1, wherein the sensor component determines a number of lanes of the T-intersection.
4. The system of clause 1, wherein the vehicle position component determines if the first vehicle is traveling in a first lane most proximate to the second vehicle, and if the second vehicle is occupying a second lane that merges into the T-intersection from the right side of the first vehicle.
5. The system of clause 1, wherein the collision prediction component determines that the driver of the second vehicle has seen the first vehicle if a front-profile of the driver is sensed by the sensor component.
6. The system of clause 5, wherein if the sensor component determines that the driver of the second vehicle has seen the first vehicle, the collision prediction component activates a timer to determine a desired lane of the second vehicle.
7. The system of clause 5, wherein if neither a front-profile nor a side-profile of the driver of the second vehicle is detected by the sensor component, the collision prediction component determines that the driver of the second vehicle intends to travel to an opposite lane relative to a driving direction of the first vehicle.
8. The system of clause 7, wherein if the driver of the second vehicle intends to travel to the opposite lane relative to the driving direction of the first vehicle, the vehicle position component determines if vision of the third vehicle is obstructed by the first vehicle from a point of view from the second vehicle.
9. The system of clause 8, wherein if the second vehicle is moving, and the third vehicle is not reducing speed, the collision prediction component activates a warning to alert the driver of the second vehicle to prevent the collision between the second vehicle and the third vehicle.
10. The system of clause 1, wherein the vehicle indicator data of the second vehicle indicates whether a right turn signal, a left turn signal, or hazard lights are activated on the second vehicle.
11. A computer-implemented method, comprising: determining, by a device operatively coupled to a processor, onboard a first vehicle driven at least partially autonomously, vehicle position data indicating position and velocity of a second vehicle and a third vehicle proximate a T-intersection; capturing, by the device, facial profile data indicating facial profiles of a driver of the second vehicle and vehicle indicator data of the second vehicle; determining, by the device, whether a collision will occur in the T-intersection between the second vehicle and the third vehicle based on the vehicle position data, the facial profile data, and the vehicle indicator data, performing, by the device, an action associated with the first vehicle to alert the second vehicle of a potential accident with the third vehicle if the collision is predicted to occur.
12. The computer-implemented method of clause 11, comprising: determining, via the device, if the second vehicle is approaching the T-intersection; determining, via the device, if the first vehicle is traveling in a lane most proximate to the second vehicle; and determining, via the device, if the third vehicle is traveling in the same direction as the first vehicle and in an adjacent lane to the first vehicle.
13. The computer-implemented method of clause 11, comprising: determining, via the device and the facial profile data, that the driver of the second vehicle has seen the third vehicle if a front-profile of the driver of the second vehicle has been sensed by the first vehicle.
14. The computer-implemented method of clause 11, comprising: determining, via the device and the facial profile data, that the driver of the second vehicle intends to travel to an opposite lane relative to a direction of the first vehicle if neither a front-profile nor a side-profile of the driver of the second vehicle are detected.
15. The computer-implemented method of clause 11, comprising: determining, via the device, if the third vehicle is hidden from view of the driver of the second vehicle by the first vehicle via the vehicle position data.
16. The computer-implemented method of clause 15, comprising: omitting a warning, via the device, to notify the second vehicle that the collision will occur between the second vehicle and the third vehicle if the third vehicle has not reduced speed and a front-profile of a second driver of the third vehicle has not been sensed.
17. A computer program product for preventing vehicle collisions within a T-intersection, the computer program product comprising a non-transitory computer readable storage medium having program instructions embodied therewith, the program instructions executable by a processor onboard a first vehicle driven at least partially autonomously to cause the processor to: determine vehicle position data indicating position and velocity of a second vehicle and a third vehicle proximate the T-intersection; capture facial profile data indicating facial profiles of a first driver of the second vehicle and a second driver of the third vehicle, as well as vehicle indicator data of the second vehicle; determine whether a collision will occur in the T-intersection between the second vehicle and the third vehicle based on the vehicle position data, the facial profile data, and the vehicle indicator data; and perform an action associated with the first vehicle to alert the second vehicle of a potential accident with the third vehicle.
18. The computer program product of clause 17, the program instructs are further executable by the processor to cause the processor to: determine that the first driver of the second vehicle has seen the third vehicle if a front-profile of the first driver of the second vehicle has been sensed.
19. The computer program product of clause 18, the program instructs are further executable by the processor to cause the processor to: determine that the first driver of the second vehicle intends to travel to an opposite lane relative to a driving direction of the first vehicle if neither a front-profile nor a side-profile of the first driver of the second vehicle has been detected.
20. The computer program product of clause 19, the program instructs are further executable by the processor to cause the processor to: predict whether the collision will occur between the second vehicle and the third vehicle via the vehicle position data of the second vehicle and the third vehicle, and wherein the action is emitting an audio warning to alert the second vehicle or the third vehicle of a potential collision.

The description of illustrated embodiments of the subject disclosure as provided herein, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as one skilled in the art can recognize. In this regard, while the subject matter has been described herein in connection with various embodiments and corresponding drawings, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below.

## Claims

1. A system onboard a first vehicle driven at least partially autonomously, the system comprising:
a processor that executes computer-executable components stored in a non-transitory computer-readable memory, the computer-executable components comprising:
a vehicle position component that determines vehicle position data indicating position and velocity of a second vehicle and a third vehicle proximate a T-intersection;
a sensor component that captures facial profile data indicating a facial profile of a driver of the second vehicle and captures vehicle indicator data of the second vehicle; and
a collision prediction component that determines whether a collision will occur in the T-intersection between the second vehicle and the third vehicle based on the vehicle position data, the facial profile data, and the vehicle indicator data,
wherein if the collision prediction component predicts the collision to occur within the T-intersection, the collision prediction component performs an action associated with the first vehicle to alert the second vehicle of a potential accident with the third vehicle.

2. The system of claim 1, wherein the sensor component determines whether the first vehicle is approaching the T-intersection and/or wherein the sensor component determines a number of lanes of the T-intersection.

3. The system of claim 1, wherein the vehicle position component determines if the first vehicle is traveling in a first lane most proximate to the second vehicle, and if the second vehicle is occupying a second lane that merges into the T-intersection from the right side of the first vehicle.

4. The system of claim 1, wherein the collision prediction component determines that the driver of the second vehicle has seen the first vehicle if a front-profile of the driver is sensed by the sensor component.

5. The system of claim 4, wherein if the sensor component determines that the driver of the second vehicle has seen the first vehicle, the collision prediction component activates a timer to determine a desired lane of the second vehicle.

6. The system of claim 4, wherein if neither a front-profile nor a side-profile of the driver of the second vehicle is detected by the sensor component, the collision prediction component determines that the driver of the second vehicle intends to travel to an opposite lane relative to a driving direction of the first vehicle.

7. The system of claim 6, wherein if the driver of the second vehicle intends to travel to the opposite lane relative to the driving direction of the first vehicle, the vehicle position component determines if vision of the third vehicle is obstructed by the first vehicle from a point of view from the second vehicle.

8. The system of claim 7, wherein if the second vehicle is moving, and the third vehicle is not reducing speed, the collision prediction component activates a warning to alert the driver of the second vehicle to prevent the collision between the second vehicle and the third vehicle.

9. The system of claim 1, wherein the vehicle indicator data of the second vehicle indicates whether a right turn signal, a left turn signal, or hazard lights are activated on the second vehicle.

10. A computer-implemented method, comprising:
determining, by a device operatively coupled to a processor, onboard a first vehicle driven at least partially autonomously, vehicle position data indicating position and velocity of a second vehicle and a third vehicle proximate a T-intersection;
capturing, by the device, facial profile data indicating facial profiles of a driver of the second vehicle and vehicle indicator data of the second vehicle;
determining, by the device, whether a collision will occur in the T-intersection between the second vehicle and the third vehicle based on the vehicle position data, the facial profile data, and the vehicle indicator data,
performing, by the device, an action associated with the first vehicle to alert the second vehicle of a potential accident with the third vehicle if the collision is predicted to occur.

11. The computer-implemented method of claim 10, comprising:
determining, via the device, if the second vehicle is approaching the T-intersection;
determining, via the device, if the first vehicle is traveling in a lane most proximate to the second vehicle; and
determining, via the device, if the third vehicle is traveling in the same direction as the first vehicle and in an adjacent lane to the first vehicle.

12. The computer-implemented method of claim 10, comprising:
determining, via the device and the facial profile data, that the driver of the second vehicle has seen the third vehicle if a front-profile of the driver of the second vehicle has been sensed by the first vehicle.

13. A computer program product for preventing vehicle collisions within a T-intersection, the computer program product comprising a non-transitory computer readable storage medium having program instructions embodied therewith, the program instructions executable by a processor onboard a first vehicle driven at least partially autonomously to cause the processor to:
determine vehicle position data indicating position and velocity of a second vehicle and a third vehicle proximate the T-intersection;
capture facial profile data indicating facial profiles of a first driver of the second vehicle and a second driver of the third vehicle, as well as vehicle indicator data of the second vehicle;
determine whether a collision will occur in the T-intersection between the second vehicle and the third vehicle based on the vehicle position data, the facial profile data, and the vehicle indicator data; and
perform an action associated with the first vehicle to alert the second vehicle of a potential accident with the third vehicle.

14. The computer program product of claim 13, the program instructs are further executable by the processor to cause the processor to:
determine that the first driver of the second vehicle has seen the third vehicle if a front-profile of the first driver of the second vehicle has been sensed.

15. The computer program product of claim 14, the program instructs are further executable by the processor to cause the processor to:
determine that the first driver of the second vehicle intends to travel to an opposite lane relative to a driving direction of the first vehicle if neither a front-profile nor a side-profile of the first driver of the second vehicle has been detected.
